# FASCICULE DE BREVET EUROPEEN

(11) **EP 1 044 412 B1**
(45) Date de publication et mention de la délivrance du brevet: **03.01.2007**
(21) Numéro de dépôt: 99950863.3
(22) Date de dépôt: 28.10.1999
(51) Int. Cl.: G06F 12/08, G06F 11/00

(54) **DISPOSITIF ET PROCEDE DE CACHE DISQUE SECURISE EN ECRITURE POUR DISQUES DURS DE SOUS-SYSTEME A MEMOIRE DE MASSE**
VORRICHTUNG UND VERFAHREN ZUM GESICHERTEN SCHREIBEN IN EINEM PLATTENCACHESPEICHER FÜR FESTPLATTEN EINES MASSENSPEICHERSUBSYSTEMS
DISK CACHE DEVICE AND METHOD FOR SECURE WRITING OF HARD DISKS IN MASS MEMORY SUBSYSTEMS

(30) Priorité: 06.11.1998 FR 9813987
(43) Date de publication de la demande: 18.10.2000
(73) Titulaire: BULL S.A., 78430 Louveciennes (FR)
(72) Inventeur: CARGEMEL, Laurent, F-49240 Avrille (FR); CARTEAU, Laurent, F-78180 Montigny le Bretonneux (FR); DELEPOULLE, Jacques, F-78640 Saint-Germain de la Grange (FR)
(86) Numéro de dépôt international: PCT/FR1999/002631
(87) Numéro de publication internationale: WO 2000/028422

(56) Documents cités:
- EP-A- 0 342 846
- EP-A- 0 573 307
- EP-A- 0 744 696
- PATENT ABSTRACTS OF JAPAN vol. 095, no. 002, 31 mars 1995 (1995-03-31) & JP 06 309232 A (HITACHI LTD), 4 novembre 1994 (1994-11-04)

## Description

La présente invention concerne un dispositif et un procédé de cache disque sécurisé en écriture pour disques durs de sous-système à mémoire de masse. Ce dispositif et ce procédé peuvent également être utilisés individuellement sur un disque dur d'un ordinateur.

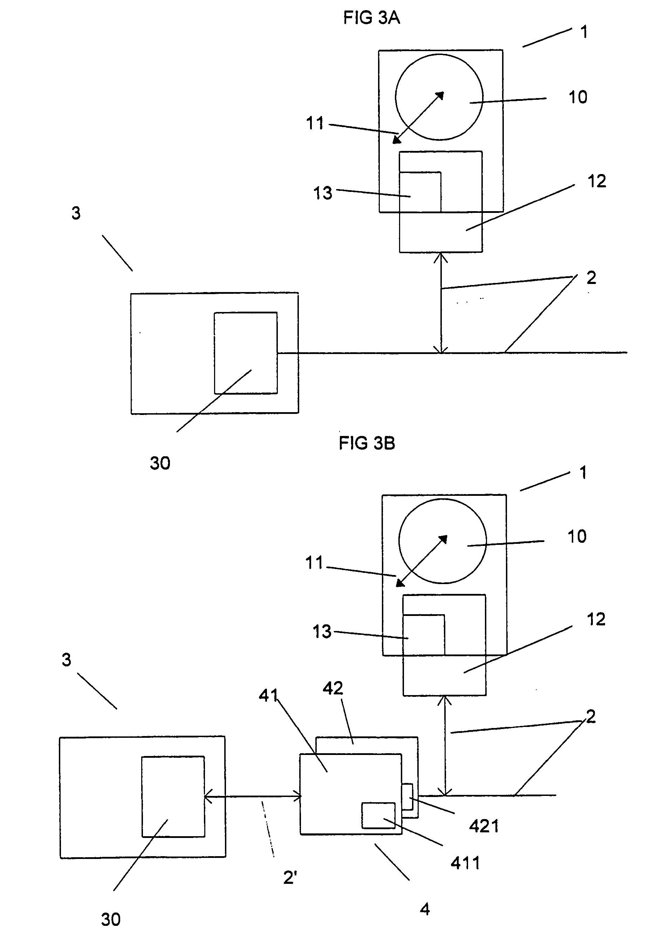

Une unité de disque dur (1) de l'art antérieur, représenté figure 3A, est essentiellement constituée d'un support magnétique (10), de moyens de lecture et d'écriture (11) sur ce support magnétique relié à une mémoire volatile (13), appelée par l'homme de métier « mémoire cache » que l'on appellera cache disque par la suite. L'unité de disque dur est relié à un système hôte (3) par l'intermédiaire d'une interface (12), d'un bus (2) entre l'interface et un circuit (30) adaptateur de bus (host bus adapter : HBA) d'un système hôte (3). Le circuit adaptateur (30) permet de connecter le bus du système hôte (3) avec le bus SCSI (2) et est géré par un gestionnaire (driver) de connexion. Le système (3) peut lui-même être équipé d'une mémoire cache appelée cache système. Le fonctionnement normal d'un disque est le suivant. Tout d'abord, l'utilisateur du système peut accéder aux données présentes sur le disque, soit par une écriture, soit par une lecture.

Lorsque le système envoie une commande de lecture vers l'unité de disque comprenant, par exemple le numéro du premier bloc à lire et le nombre total de blocs à lire. L'unité de disque qui reçoit cette commande par l'interface, recherche les données, les lit et les met dans le cache disque. Une fois que les informations sont dans le cache, l'unité de disque envoie un message vers le système pour signaler que les données sont prêtes à être envoyées. Le système répond par une commande pour déclencher l'envoi des données.

L'opération d'écriture débute par la mise dans le cache système des données à écrire, ensuite le système envoie une commande d'écriture vers l'unité de disque. Lorsque l'unité de disque est prête pour recevoir les données, elle en informe le système, qui transmet alors les données vers l'unité de disque en passant par l'adaptateur (HBA), le bus SCSI puis par l'interface de l'unité de disque. Les données reçues par l'unité de disque sont alors stockées dans le cache disque. Ensuite, l'unité de disque procède à l'écriture proprement dite des données du cache sur le support magnétique (10). Une fois l'écriture effectuée, ainsi que les opérations de vérification et/ou de correction des erreurs d'écriture éventuelles, l'unité de disque envoie un message "FIN OK" au travers de l'interface pour indiquer au système que le disque est à nouveau prêt pour recevoir des données. Cette procédure d'écriture préserve de manière efficace l'intégrité des données, puisque tant que les données ne sont pas écrites réellement sur le support magnétique, l'unité de disque n'envoie pas le message "FIN OK", et le système conserve donc les données dans son cache système. Ainsi, même si une panne quelconque survient pendant l'écriture sur le support magnétique, par exemple suite à une défaillance de l'unité de disque ou à une panne d'alimentation électrique, le message "FIN OK" ne sera pas envoyé, mais les données seront conservées dans le cache du système.

Cependant il est clair que cette procédure bloque le système et ralentit donc les opérations de celui-ci tant que l'opération d'écriture n'est pas achevée, c'est-à-dire tant que le message "FIN OK" n'est pas envoyé par l'unité disque.

Il est connu, dans l'art antérieur, des possibilités d'améliorer les performances d'un disque. Tout d'abord, les performances du disque peuvent être augmentées en modifiant l'architecture du disque. Cependant, cette solution est très coûteuse et n'est envisageable que par les fabriquants de disques.

Les performances en lecture peuvent être améliorées en envoyant dans le cache du disque plus de données (par exemple une page) que celles demandées par le système. Ainsi, lorsque le système demande ultérieurement d'autres données de la page mémorisée dans le cache, celles-ci étant déjà présentes dans le cache du disque, leur accès pour le système est plus rapide.

En écriture, les performances de l'unité disque peuvent être améliorées en utilisant réellement le cache du disque pour masquer une opération. Pour cela, une fonctionnalité, appelée fonction de cache écriture, déjà existante sur les disques de l'art antérieur, consiste à envoyer le message "FIN OK", dès que les données transmises par le système sont dans le cache du disque. Ainsi, l'opération d'écriture est effectuée pendant l'envoi des données suivantes, d'où un gain de performance important. Cependant, cette technique possède l'inconvénient majeur de ne pas assurer la préservation de l'intégrité des données.

En effet, dans certains cas d'incident, les données ne seront pas écrites ou partiellement écrites sur le disque sans qu'il soit possible de récupérer les données perdues. Par exemple, si une panne d'alimentation électrique des unités disques survient après que le message "FIN OK" soit envoyé par l'unité disque au système, mais avant l'écriture complète des données du cache disque sur le support magnétique, ces données sont alors perdues. En effet, le cache disque étant de la mémoire volatile, les données sont effacées dès que le cache disque n'est plus alimenté électriquement. Le message "FIN OK" ayant été envoyé par l'unité de disque et reçu par le système, le système a donc vidé son cache système pour stocker les données de la prochaine écriture et n'a plus les données qui se trouvaient dans le cache disque. Cet inconvénient est d'autant plus critique qu'il peut passer inaperçu lorsque, par exemple, la panne d'électricité est de très courte durée (micro coupure). Alors, non seulement les données sont définitivement perdues mais cette perte n'est pas détectée par le système. Cet inconvénient majeur de l'utilisation du cache disque en écriture interdit formellement l'utilisation du cache tel que décrit précédemment lorsque que l'intégrité des données doit être préservée.

Il existe également des solutions utilisant la fonction du cache pour l'écriture, mais elles sont coûteuses et complexes, car elles nécessitent l'emploi d'une fonction contrôleur ou l'utilisation d'un cache supplémentaire ainsi que sa gestion et sa protection.

La présente invention a donc pour objet de pallier les inconvénients de l'art antérieur en proposant un dispositif permettant d'utiliser la fonction de cache disque en écriture pour améliorer les performances d'un disque en écriture, sans risque de perte de données.

Ce but est atteint par le fait que le dispositif de cache disque sécurisé en écriture comprend un système hôte relié par un adaptateur (host bus adapter) du système hôte à un bus, une interface et au moins une unité de disque dur, des moyens de fourniture d'énergie de secours pendant une durée déterminée, et au moins un dispositif principal d'alimentation électrique de l'unité de disque comprenant, des moyens de surveillance d'au moins des moyens fournissant l'énergie électrique et des dispositifs principaux d'alimentation, le dispositif étant caractérisé en ce que les moyens de surveillance sont interrogeables par des moyens d'interrogation du système hôte pour que ce dernier puisse valider ou non la fonction de cache disque en écriture dans les commandes d'écriture à destination des unités de disques, en fonction des informations recueillies par les moyens de surveillance.

Selon une autre particularité, les informations recueillies par les moyens de surveillance représentent l'état de fonctionnement des alimentations principales et des moyens de fourniture d'énergie de secours.

Selon une autre particularité, la fonction de cache disque en écriture est validée par le système hôte dans les commandes d'écriture tant que les alimentations principales et les moyens de fournitures sont opérationnels.

Selon une autre particularité, le système hôte provoque l'écriture des données contenues dans tous les caches disques sur les disques magnétiques respectifs dès que les informations recueillies par les moyens de surveillance indiquent que les alimentations principales ou les moyens de fourniture d'énergie de secours sont défaillantes.

Selon une autre particularité, les moyens d'interrogation comprennent un agent implanté à un niveau supérieur à celui du gestionnaire de connexion de l'adaptateur du système hôte, agent qui effectue une scrutation des moyens de surveillance selon une période déterminée et positionne un drapeau (flag) indiquant si la fonction de cache disque en écriture est autorisée ou non, ce drapeau étant consulté par le gestionnaire de connexion du système hôte avant chaque envoi de commande d'écriture vers un disque.

Selon une autre particularité, la durée pendant laquelle les moyens de fourniture d'énergie doivent permettre le bon fonctionnement du système informatique correspond au moins à la durée nécessaire pour que les données contenues dans chaque cache disque d'une unité disque soient écrites sur le support magnétique, augmentée du laps de temps correspondant à la période déterminée de surveillance entre deux interrogations des moyens de surveillance.

Selon une autre particularité, le dispositif comprend un circuit intégré surveillant les moyens de fourniture de l'énergie électrique de secours et chaque dispositif principal d'alimentation électrique et envoyant sur le bus un signal d'interface pour interdire l'accès du bus au système hôte pendant une durée déterminée de sorte que plus aucune commande n'est transmise aux unités disque.

Un deuxième but de l'invention consiste à proposer un procédé de cache disque en écriture sécurisé palliant les inconvénient de l'art antérieur.

Ce deuxième but est atteint par le fait que le procédé de cache disque sécurisé en écriture d'un système informatique comprenant au moins une unité disque dur alimentée par au moins un dispositif principal d'alimentation électrique et des moyens de fourniture d'énergie de secours pendant une durée déterminée, , un système hôte relié par un adaptateur du système hôte (host bus adapter), un bus à au moins l'unité de disque et des moyens de surveillance d'au moins des moyens fournissant l'énergie électrique et des alimentations principales, caractérisé en ce qu'il comprend;
- une étape de surveillance des moyens de fourniture d'énergie de secours et de chaque dispositif d'alimentation électrique,
- une étape de signalisation de l'état des moyens de fourniture d'énergie de secours et de chaque dispositif d'alimentation électrique,
- si les moyens de fourniture d'énergie de secours et les deux dispositifs d'alimentation électrique sont tous en état fonctionnel le procédé comprend une étape de validation de la fonction de cache disque écriture, dans le cas contraire, le procédé comprend une étape de sauvegarde comprenant une étape d'invalidation de la fonction de cache disque en écriture et une étape d'écriture des données contenues dans le cache disque des unités disque sur le support magnétique des unités disques.

D'autres particularités et avantages de la présente invention apparaîtront plus clairement à la lecture de la description ci-après faite en référence aux dessins annexés dans lesquels :
- la figure 1 représente un schéma détaillé du dispositif selon l'invention,
- la figure 2 représente une deuxième variante d'utilisation du dispositif selon l'invention,
- les figures 3A et 3B représentent deux variantes de réalisation de système informatique de l'art antérieur utilisant le cache disque pour les opérations d'écriture sur le disque.

Comme expliqué précédemment, la figure 3A représente une unité de disque dur (1) associée à un système hôte dans une configuration de l'art antérieur. Dans cette configuration, l'unité de disque dur (1) comprend une fonctionnalité permettant d'utiliser le cache (13) disque dans les opérations d'écriture sur le support magnétique (10) de l'unité de disque (1), mais avec un risque important de perte de données en cas de coupure d'alimentation, pour les raisons expliquées précédemment.

La figure 3B représente une autre variante de l'art antérieur utilisant la fonction de cache écriture pour l'opération d'écriture sur le disque magnétique. L'unité de disque (1) et le système hôte (3) sont identiques à ceux de la figure 3A. Le principe de cette solution consiste à insérer sur le bus (2) entre le ou les unités de disques (1) et le système hôte (3), un sous-système (4), permettant de sécuriser l'écriture des données en utilisant la fonction de cache écriture. Ce sous-système est par exemple, un sous-système RAID (Redundant Array of Inexpensive Disks). Un sous-système RAID comprend essentiellement deux contrôleurs (41, 42) gérant respectivement deux caches (411, 412). L'utilisation de deux contrôleurs (41, 42) est réalisée dans un souci de sécurisation, afin d'assurer le fonctionnement correct de l'opération d'écriture même si un des contrôleurs (41 ou 42) est défaillant. Ce sous-système (4) comprend également des moyens permettant de délivrer de l'énergie électrique et des moyens de surveillance de la ou des alimentations principales. Ainsi, dès qu'une des alimentations principales est défaillante, un des contrôleurs du sous-système RAID (4) invalide la fonction de cache disque en écriture du ou des unités disques (1) afin d'éviter tous risques de perte de données. Le fonctionnement de ce sous-système est le suivant lorsque la fonction de cache disque en écriture est autorisée. Tout d'abord le système hôte (3) envoie une commande d'écriture de données sur un interface (2') entre le système hôte (3) et le sous-système RAID (4). Le premier contrôleur (41) copie les données dans un premier cache (411), puis dans le deuxième cache (421). Une fois que les données sont dans le deuxième cache (421), le premier contrôleur (41) envoie le message "FIN OK" vers le système hôte (3) et simultanément commence l'opération d'écriture sur le disque. Dès que les données sont écrites sur le support magnétique (10), les deux caches (411, 421) sont libérés. Ainsi, dans cette solution de l'art antérieur toutes les opérations d'écriture sont gérées par le sous-système RAID. Cependant, cette solution même si elle remplit de façon satisfaisante son rôle de sauvegarde de l'intégrité des données, est consommatrice en temps puisque les contrôleurs (41, 42) ont un délai intrinsèque de traitement des commandes d'écriture. De plus, cette solution est coûteuse puisqu'il est nécessaire de mettre en place deux contrôleurs et deux caches disques supplémentaires.

Avant de décrire le dispositif selon l'invention, il convient de préciser à nouveau que la fonction de cache disque en écriture est déjà existante sur les disques et qu'elle est validée ou non par l'intermédiaire d'un bit de commande WCE envoyé par le système en même temps que la commande d'écriture du système sur l'interface. Lorsque la commande WCE à un de ses bits positionné à la valeur 1, alors la fonction de cache écriture est autorisée. Lorsque WCE a ce même bit positionné à la valeur 0, la fonction de cache écriture est ignorée. Il est à noter également que cette commande ne peut être modifiée que par l'intermédiaire du bus (2) entre le disque (1) et le système hôte (3). De plus, dans l'art antérieur, cette commande WCE est programmée une fois pour toute sur le gestionnaire (driver) de connexion du circuit d'adaptateur de bus (30) (HBA) qui constitue un interface du système hôte (3) vers l'unité disque (1), ou bien est modifiée par l'intermédiaire d'un sous-système de gestion de l'écriture, tel que le sous-système RAID décrit à la figure 3B, c'est-à-dire un sous-système comprenant au moins un contrôleur susceptible d'effectuer cette modification.

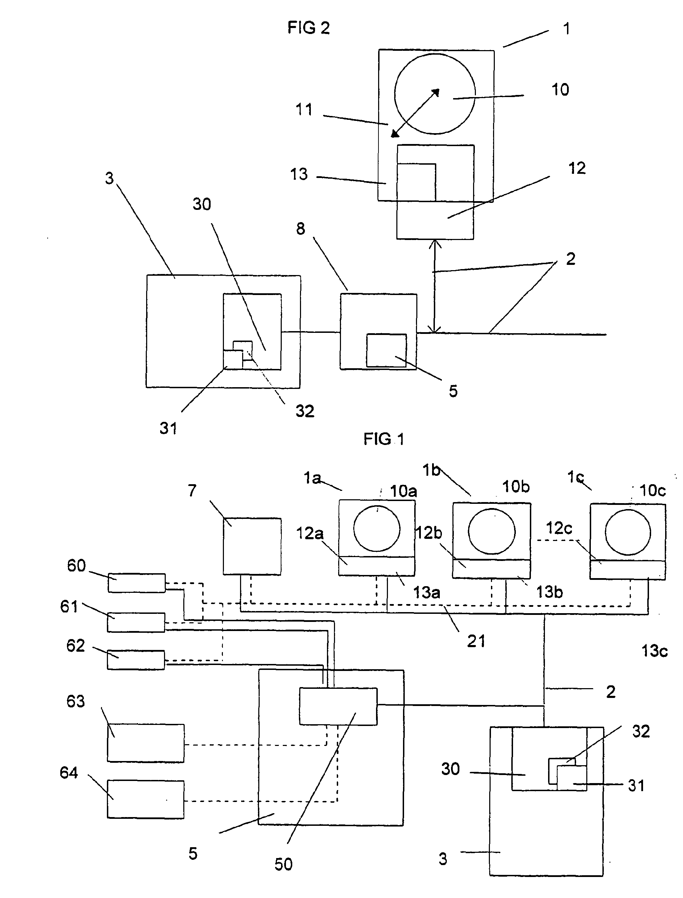

La figure 1 représente une première variante d'utilisation du dispositif selon l'invention. Dans cette variante, au moins une unité de disque (1a, 1b, 1c), et par exemple un autre périphérique (7), sont alimentés par un circuit d'alimentation (21) connecté à deux dispositifs principaux d'alimentation (60, 61). Il est à la portée de l'homme de métier d'adapter la variante de la figure 1 pour mettre en place un nombre différent de dispositifs principaux d'alimentation électrique. Les deux dispositif principaux d'alimentation (60,61) utilisent le secteur comme source d'énergie électrique. Le dispositif selon l'invention comprend également des moyens (62) de fourniture d'énergie de secours, tel que par exemple, une batterie de sauvegarde (battery back up : BBU), pour suppléer à un défaut de fonctionnement des deux dispositifs principaux alimentation (60, 61) pendant une durée déterminée, par exemple 1 minute. Chaque unité de disque (1a, 1b, 1c) et chaque périphérique (7) sont connectés au circuit (30) adaptateur de bus (Host Bus Adapter) d'un système hôte (3) par l'intermédiaire d'une interface (12a, 12b, 12c) et d'un bus (2), par exemple, de type SCSI (SCSI : Small Computer System Interface) ou de type interface série (FIBER Channel) ou tout autre type d'interface.

Les moyens (62) de fourniture d'énergie de secours comprennent, par exemple une batterie fournissant sur le circuit (21) d'alimentation, une tension suffisante pour le fonctionnement normal de toutes les unités disques (1a, 1b, 1c) pendant une durée déterminée, pour se substituer aux alimentations (60, 61) principales qui ne fournissent plus d'énergie électrique suffisante. Il est également possible d'utiliser un système d'alimentation d'énergie non interruptible, appelé par l'homme de métier UPS (Uninterruptible Power Supply), qui est connecté en amont d'une alimentation (60, 61) principale et remplit la même fonction qu'une batterie. Tout autre dispositif de fourniture d'énergie de secours est également envisageable. La durée minimum pendant laquelle les moyens (62) de fourniture d'énergie de secours doivent alimenter en énergie toutes les unités de disques correspond au moins au temps mis, pour écrire sur les supports magnétiques (10) les données contenues dans le ou les caches disque des unités disques.

Un dispositif (5) de surveillance constitué de circuits électroniques est connecté au bus (2) entre le système hôte (3) et la ou les unités disques (1 a, 1b, 1c). Ce dispositif (5) de surveillance est connecté de sorte qu'il est considéré par le système hôte (3) comme un périphérique à part entière au même titre que la ou les unités disques (1a, 1b, 1c). Ce dispositif (5) de surveillance comprend des moyens (50) de surveillance, d'une part des alimentations principales (60, 61) et d'autre part des moyens (62) de fourniture d'énergie de secours. Afin d'assurer cette surveillance, le dispositif (5) de surveillance est connecté électriquement à la sortie de chacune des dispositifs principaux d'alimentation (60, 61) et à la batterie (62) de secours. Cette surveillance consiste à vérifier et à mémoriser l'état de fonctionnement des alimentations (60, 61) et de la batterie (62). Par état de fonctionnement, il faut comprendre, premièrement la présence, deuxièmement le bon fonctionnement, et troisièmement si l'élément est prêt à remplir sa fonction. Ainsi, pour la batterie (62), le dispositif (5) de surveillance vérifie la présence, le bon fonctionnement, c'est-à-dire si la batterie (62) est apte à fournir de l'énergie, et enfin si la batterie (62) est chargée suffisamment pour fournir une tension suffisante à la fonction d'alimentation de secours pendant une durée déterminée.

Le dispositif (5) de surveillance peut également surveiller, par exemple le bon fonctionnement d'au moins un ventilateur (63), et/ou la température du sous-système informatique comprenant l'ensemble des éléments de la figure 1 hormis le système hôte (3) et le bus (2). La température est mesurée par l'intermédiaire d'un capteur de température (64).

Puisque le dispositif (5) de surveillance est connecté par le bus (2) au circuit adaptateur (30) du système hôte (3) au même titre qu'un autre périphérique, ce système hôte (3) a donc accès de manière extrêmement simple et rapide, à l'état de tous les composants surveillés par le dispositif (5) de surveillance. Notamment à l'état des dispositifs principaux d'alimentation (60, 61) et des moyens (62) de fourniture d'énergie de secours. En effet, il suffit au système hôte de lire les informations mémorisées par le dispositif (5) de surveillance selon l'invention, par exemple par une commande de lecture envoyée sur le bus (2) vers le dispositif (5) de surveillance. Ainsi, lorsque le système hôte (3) sait, après avoir lu les informations mémorisées par le dispositif (5) de surveillance, que les dispositif principaux d'alimentation (60, 61) fonctionnent normalement et que les moyens (62) de fourniture d'énergie de secours sont prêts à délivrer une alimentation pendant la durée déterminée, alors toutes les commandes d'écritures sur chaque disque seront exécutées en utilisant la fonction de cache écriture des disques. Le système hôte envoie dans chaque commande d'écriture un bit de commande WCE positionné à 1. Si, par contre, après lecture des informations du dispositif (5) de surveillance il est établi que soit l'un des dispositifs principaux d'alimentation (60, 61) est hors service, soit les moyens (62) de fourniture d'énergie de secours ne sont pas prêts, alors le bit de la commande WCE est positionné à 0 dans toutes les commandes d'écriture qui seront alors exécutées sans la fonction de cache écriture.

Afin d'éviter une lecture des informations du circuit (5) par le système hôte (3) à chaque commande d'écriture, une scrutation périodique est mise en place au niveau du système hôte (3), par exemple par l'intermédiaire d'un agent (31) tel qu'un démon installé en amont du gestionnaire (32) du circuit (30) adaptateur de bus (HBA) du système hôte (3). Dans ce cas de figure, c'est l'agent (31) qui selon une période déterminée, par exemple de 10 secondes, scrute les circuits (5) de l'invention pour vérifier par le contenu de registres de mémorisation des circuits (5) l'état des dispositif principaux d'alimentation (60, 61) et des moyens (62) de fourniture d'énergie de secours. Si ces moyens (60, 61, 62) de fourniture d'énergie sont tous en état de fonctionnement, alors l'agent positionne un drapeau (flag) indiquant au système hôte que la fonction du cache écriture est autorisée. Dans le cas contraire, le drapeau n'est pas positionné, indiquant au système hôte que la fonction du cache écriture n'est pas autorisée. La mise en place de cet agent (31) nécessite également une légère modification du gestionnaire (32) du circuit adaptateur de bus (30) (HBA) du système hôte (3). En effet, comme il a été expliqué précédemment, dans l'art antérieur, la fonction de cache écriture est programmée une fois pour toute. Cette programmation s'effectue au niveau du gestionnaire du HBA du système hôte (3) qui envoie, dans toutes commandes d'écriture, soit un bit de commande WCE positionné à 1 pour autoriser la fonction de cache écriture, soit un bit de commande WCE positionné à 0 pour interdire la fonction de cache écriture. Selon l'invention, le gestionnaire de l'adaptateur (HBA) est modifié pour qu'avant chaque envoi de commande d'écriture vers un disque, le gestionnaire consulte le drapeau positionné dans un moyen de mémorisation du système hôte (3) par l'agent (31) pour déterminer si le bit de commande WCE doit être positionné à 1, ou si le bit de commande WCE doit être positionné à 0 dans la commande d'écriture.

Une autre fonctionnalité est prévue pour assurer une intégrité complète des données même lors d'une coupure d'alimentation. Cette fonctionnalité consiste à provoquer, pour chaque unité disque l'écriture des données contenues dans le cache disque (13) sur le support magnétique(10) dès qu'il y a un défaut d'alimentation (coupure secteur ou défaillance des alimentations).

Le cas de figure est le suivant, la fonction de cache écriture est validée puisque dans ce cas les moyens (60, 61, 62) de fourniture d'énergie sont opérationnels. Lorsque la coupure d'alimentation secteur survient, les moyens de fourniture d'énergie de secours (62) prennent le relais pour continuer à alimenter les disques, et simultanément les moyens (50) de surveillance mémorisent le changement d'état des dispositifs principaux d'alimentation (60, 61). Le changement d'état des deux dispositifs d'alimentation (60, 61) provoque également l'invalidation de la fonction de cache. Cette information sur l'invalidation de la fonction de cache écriture est également mémorisée par les moyens (50) de surveillance et donc accessible au système hôte (3). Dès que l'agent (31) scrute les moyens de surveillance, le drapeau mémorisé dans le système hôte (3) change de position, puisque la fonction de cache écriture n'est plus autorisée. Par conséquent le gestionnaire (32) du circuit adaptateur de bus (30) du système hôte n'envoie plus les commandes d'écriture en utilisant la fonction de cache écriture ce qui a pour conséquence de sécuriser les opérations d'écriture. De plus, simultanément, l'agent (31) provoque l'envoi sur le bus (2) d'une commande « flush » connue, provoquant pour toutes les unités disques, l'écriture sur le support magnétique (10a, 10b, 10c) respectif de chaque unité de disque (1a, 1b, 1c) des données contenues dans les cache disques (13a, 13b, 13c)). Les moyens (62) de fourniture d'énergie de secours sont calibrés pour fournir l'énergie nécessaire pour le bon fonctionnement de toutes les unités disques (1a, 1b, 1c) pendant une durée au moins égale à la somme du laps de temps existant entre deux scrutations de l'agent (31), et du laps de temps nécessaire pour que tous disques (1a, 1b, 1c) procèdent à l'écriture des données de leurs caches respectifs (13a, 13b, 13c) sur les supports magnétiques respectif (10a, 10b, 10c).

A titre d'exemple de réalisation , le dispositif (5) de surveillance comprend un circuit intégré (50) développé spécifiquement pour le besoin ou de type connu, par exemple GEM 200 (Guadian Enclosure Management) de Silicon Design Resource, supportant une fonction SAF TE (SCSI Access Fault Tolerant Enclosure) standardisée, pour la surveillance à distance de sous-systèmes à mémoire de masse. Cette fonction permet au circuit (50) de mémoriser en temps réel, par l'intermédiaire d'octets, l'état de chaque élément surveillé, comme par exemple les dispositifs principaux d'alimentation (61, 60), les ventilateurs ou tout autre élément que l'utilisateur souhaite surveiller. Cependant, ce circuit intégré ne comprend pas, à l'origine, de fonctions de surveillance de moyens (62) de fourniture d'énergie de secours, telle qu'une batterie. Ainsi, selon l'invention, certaines informations mémorisées dans des octets, par le circuit intégré, sont redéfinies pour que ce circuit intégré fournisse également un état sur les moyens (62) de fourniture d'énergie de secours.

Dans le cas où la fonction SAF TE est utilisée pour la mise en oeuvre du dispositif selon l'invention, une première commande de cette fonction qui permet de déterminer la configuration de l'ensemble des composants surveillés par la puce, c'est-à-dire l'inventaire des composants présents, est redéfinie. A l'origine, la fonction SAF TE est utilisée pour la surveillance de deux ventilateurs et deux alimentations. Or, il est possible théoriquement de surveiller un troisième ventilateur et une troisième alimentation. Selon l'invention, la détection d'un troisième ventilateur et d'une troisième alimentation est utilisée pour la détection d'un moyen de fourniture d'énergie de secours tel qu'une batterie.

Une deuxième commande de la fonction SAF TE permet de déterminer l'état de chaque composant surveillé par ce circuit. Comme expliqué précédemment, la puce de l'art antérieur, n'est pas prévue pour fournir des renseignements sur l'état de fonctionnement, par exemple d'une batterie. Ainsi, par exemple, deux fonctionnalités existantes sur le circuit (50) sont redéfinies pour fournir un état de fonctionnement d'une batterie. Une première fonctionnalité, initialement prévue pour indiquer l'état d'un troisième ventilateur, est par exemple utilisée pour indiquer, par une valeur déterminée d'un premier octet spécifique mémorisé dans le circuit (50), l'état de la batterie. La batterie peut avoir trois états possibles, un premier où la batterie est présente et est en état de fonctionnement, un deuxième où la batterie n'est pas en état de fonctionner, ce qui signifie que la batterie doit être remplacée ou réparée, et un troisième état où la batterie est absente.

Une deuxième fonctionnalité, initialement prévue pour indiquer l'état d'une troisième alimentation, et étroitement liée à la première fonctionnalité permet d'indiquer par une valeur déterminée d'un deuxième octet spécifique mémorisé dans le circuit (50), si la fonction de cache écriture est autorisée et si la batterie est prête. Les cas de figures sont les suivants. Soit l'octet spécifique prend une première valeur déterminée pour indiquer que la fonction de cache écriture est autorisée. Enfin, l'octet spécifique peut prendre une deuxième valeur déterminée pour indiquer que la fonction de cache écriture n'est pas autorisée, mais que la batterie (62) est prête à fonctionner, soit l'octet spécifique prend une troisième valeur déterminée pour indiquer que la fonction de cache écriture n'est pas autorisée, mais que la batterie n'est pas prête à fonctionner.

Ainsi, il suffit au système hôte (3) de venir lire le deuxième octet spécifique pour ensuite valider ou non la fonction de cache disque en écriture. La lecture de cet octet étant réalisé par une commande de lecture connue (Read Enclosure Status) envoyée au circuit intégré par l'intermédiaire du circuit adaptateur de bus (30) et du bus (2).

C'est l'agent (31) utilisé pour effectuer la scrutation, qui exécute la commande de lecture précitée.

Le dispositif (5) de surveillance selon l'invention comprend également par exemple un deuxième circuit intégré (non représenté). Ce deuxième circuit intégré est également connecté aux dispositifs (60, 61) d'alimentation électrique et aux moyens (62) de fourniture d'énergie de secours pour en déterminer l'état de fonctionnement. Dès qu'un dispositif (60, 61) d'alimentation électrique et/ou les moyens (62) de fourniture d'énergie de secours ne sont plus en état fonctionnel, le deuxième circuit intégré produit un signal d'interface particulier et l'envoie sur le bus (2). Ce signal d'interface est connu en soi et permet de rendre le bus inaccessible au système hôte (3) pendant une durée déterminée. Ce signal est communément appelé Hardware SCSI Reset. Ainsi, dès que ce signal d'interface est envoyé sur le bus (2), plus aucune commande ne peut être envoyée vers les unités (1a, 1b, 1c) disque, ce qui permet à chaque unité (1a, 1b, 1c) disque de réaliser les écritures des données contenu dans chaque cache disque (13a, 13b, 13c), sur chaque support (10a, 10b, 10c) magnétique. Ce deuxième circuit intégré permet donc d'augmenter la sécurisation des données. En effet, les caches disques (13a, 13b, 13c) seront normalement déjà vide lorsque la commande « flush » décrite précédemment sera déclenchée.

La figure 2 représente une deuxième variante d'utilisation du dispositif selon l'invention. Dans cette variante, le dispositif (5) de surveillance selon l'invention est par exemple implanté sur une carte adaptatrice (8) d'interface de l'art antérieur, par exemple d'un sous-système à attachement direct de disques. En effet, en règle générale, une carte adaptatrice (8) est utilisée pour convertir les signaux échangés entre l'adaptateur (30) du système hôte (3) et les interfaces (12) des unités disques (1a, 1b, 1c). Ainsi, en implantant le dispositif (5) de surveillance selon l'invention sur cette carte (8) celui-ci est donc connecté à l'interface du système hôte (3). Le dispositif (5) de surveillance selon l'invention est identique à celui décrit en liaison avec la première variante d'utilisation du dispositif de l'invention.

Il est également possible d'implanter le dispositif (5) de surveillance selon l'invention sur un système RAID de l'art antérieur, décrit figure 3B, pour en améliorer les performances. Ainsi, avec le système de l'art antérieur, lorsque les données sont écrites dans le premier cache (411) elles sont ensuite directement écrites dans le cache (13a, 13b, 13c) de l'unité disque (1a, 1b, 1c). Une fois les données écrites dans le cache (13a, 13b, 13c) de l'unité disque (1a, 1b, 1c),, ce dernier envoie donc le message "FIN OK" puisque la fonction de cache écriture est autorisée, et simultanément le premier cache (411) du sous-système RAID est libéré.

On conçoit que, selon l'invention, la fonction de cache écriture des disques peut être utilisée tout en préservant l'intégrité des données. De plus, la validation de la fonction écriture est autorisée ou non par la lecture d'une seule information contenue par exemple dans un seul octet spécifique d'un circuit intégré de surveillance. Cet accès rapide à cette information, par l'intermédiaire de l'interface entre les disques (1a, 1b, 1c) et le système hôte (3), ne diminue pas le gain de temps obtenu par l'intermédiaire de l'utilisation du cache écriture, contrairement à l'emploi de contrôleur de type RAID.

De plus, le dispositif (5) de surveillance selon l'invention n'est pas implanté sur le parcourt des données, contrairement au système de l'art antérieur, mais effectue la validation de la fonction de cache écriture de façon parallèle au flux de données, ce qui a pour conséquence de ne pas perturber ce flux et donc de conserver le gain maximum de la fonction de cache écriture des disques.

A titre d'indication, le temps moyen pour qu'une commande d'écriture soit exécutée par un disque est d'environs 10ms, lorsque la fonction de cache écriture n'est pas utilisée et d'environs 2ms lorsqu'elle l'est. Les solutions de l'art antérieur utilisant des sous-systèmes destinés à gérer l'écriture sur les disques pour utiliser la fonction de cache écriture, nécessitent un temps supplémentaire de traitement de la commande d'écriture de l'ordre de 2ms d'où un temps global de l'ordre de 4ms.

Bien sûr, le dispositif (5) de surveillance selon l'invention peut aisément être appliqué aussi bien à des sous-systèmes à mémoire de masse externe qu'à des disques internes. Le dispositif (5) de surveillance selon l'invention est également applicable à tous types d'interfaces. Dans l'exemple décrit précédemment, le dispositif (5) de surveillance selon l'invention est connecté sur l'interface (12) fonctionnelle des unités disques, cependant il est à la portée de l'homme de métier d'utiliser une autre interface pour réaliser la surveillance des alimentations et des moyens de fourniture d'énergie de secours sans sortir du cadre de l'invention.

La présente description de dispositif est réalisée pour des unités disque comprenant un support magnétique, le dispositif selon l'invention peut également être appliqué à des unités de disque comprenant un support de type optique.

Il est clair que d'autres modifications à la portée de l'homme du métier entrent dans le cadre de l'invention.

## Revendications

1. Dispositif de cache disque sécurisé en écriture comprenant, un système hôte (3) relié par un adaptateur (30) du système hôte à un bus (2), une interface (12) et au moins une unité de disque dur(1), des moyens (62) de fourniture d'énergie de secours pendant une durée déterminée, et au moins un dispositif principal (60, 61) d'alimentation électrique de l'unité de disque, des moyens de surveillance (50) d'au moins des moyens (62) de fourniture de l'énergie électrique de secours et des dispositifs principaux d'alimentation (60,61), **caractérisé en ce que** les moyens (50) de surveillance sont connectés au bus (2) et sont interrogeables par des moyens (31) d'interrogation du système hôte (3) ce dernier validant ou non la fonction de cache disque écriture dans les commandes d'écriture à destination de la ou des unités de disque (1a, 1b, 1c), en fonction des informations recueillies par les moyens (50) de surveillance.

2. Dispositif de cache disque sécurisé en écriture selon la revendication 1 **caractérisé en ce que** les informations recueillies par les moyens (50) de surveillance représentent l'état de fonctionnement de chaque alimentation (60, 61) principale et des moyens (62) de fourniture d'énergie de secours.

3. Dispositif de cache disque sécurisé en écriture selon la revendication 1 ou 2 **caractérisé en ce que** la fonction de cache écriture est validée par le système hôte (3) dans les commandes d'écriture tant que les alimentations (60,61) principales et les moyens (62) de fournitures d'énergie de secours sont opérationnels.

4. Dispositif de cache disque sécurisé en écriture selon l'une des revendications 1 à 3 **caractérisé en ce que** le système hôte (3) provoque l'écriture des données contenues dans tous les caches disques(13a, 13b, 13c) des unités disque (1a, 1b, 1c) sur le support magnétique (10a, 10b, 10c) respectifs dès que les informations recueillies par les moyens (50) de surveillance indiquent que les alimentations principales (60, 61) et les moyens (62) de fourniture d'énergie de secours sont défaillants.

5. Dispositif de cache disque sécurisé en écriture selon l'une des revendications 1 à 4 **caractérisé en ce que** les moyens (31) d'interrogation comprennent un agent (31) implanté à un niveau supérieur à celui du gestionnaire de la connexion (30) du système hôte (3) qui effectue une scrutation des moyens (50) de surveillance selon une période déterminée et positionne un drapeau (flag) indiquant si la fonction de cache écriture est autorisée ou non, ce drapeau étant consulté par le gestionnaire de connexion (30) du système hôte (3) avant chaque envoi de commande d'écriture vers au moins un disque (1a, 1b, 1c).

6. Dispositif de cache disque sécurisé en écriture selon l'une des revendications 1 à 5 **caractérisé en ce que**, la durée pendant laquelle les moyens (62) de fourniture d'énergie doivent permettre le bon fonctionnement du système informatique, correspond au moins à la durée nécessaire pour que les données contenues dans chaque cache disque (13a, 13b, 13c) d'une unité disque (1a, 1b, 1c) soient écrites sur le support magnétique (10a, 10b, 10c), augmenté du laps de temps nécessaire entre deux interrogations des moyens (50) de surveillance.

7. Dispositif de cache disque sécurisé en écriture selon l'une des revendications 1 à 6 **caractérisé en ce qu'**il comprend un circuit intégré surveillant les moyens (62) de fourniture de l'énergie électrique de secours et chaque dispositif principal d'alimentation (60,61) électrique et envoyant sur le bus (2) un signal d'interface pour interdire l'accès du bus au système hôte (3) pendant une durée déterminée de sorte que plus aucune commande n'est transmise aux unités (1a, 1b, 1c) disque.

8. Procédé de cache disque sécurisé en écriture d'un système informatique comprenant au moins une unité disque dur (1a, 1b, 1c) alimentée par au moins un dispositif principal d'alimentation (60, 61) électrique et des moyens (62) de fourniture d'énergie de secours pendant une durée déterminée, un système hôte(3) relié par un adaptateur (30) du système et un bus (2) à au moins l'unité de disque et des moyens (50) de surveillance d'au moins des moyens (62) fournissant l'énergie électrique de secours et des alimentations principales (60, 61), **caractérisé en ce que** le procédé comprend:
- une étape de surveillance des moyens (62) de fourniture d'énergie de secours et de chaque dispositif (60, 61) d'alimentation électrique,
- une étape de signalisation de l'état des moyens (62) de fourniture d'énergie de secours et de chaque dispositif (60, 61) d'alimentation électrique,
- si les moyens (62) de fourniture d'énergie de secours et les deux dispositifs (60, 61) d'alimentation électrique sont tous en état fonctionnel le procédé comprend une étape de validation de la fonction de cache disque écriture, dans le cas contraire, le procédé comprend une étape de sauvegarde comprennant une étape d'invalidation de la fonction de cache disque en écriture et une étape d'écriture des données contenues dans le cache (13a, 13b, 13c) disque des unités (1a, 1b, 1c) disque sur le support magnétique (10a, 10b, 10c) des unités disques (1a, 1b, 1c).

## Claims

1. Disk cache device secured in write mode comprising a host system (3) connected by an adaptor (30) of the host system to a bus (2), an interface (12) and at least one hard disk drive (1), back-up power supply means (62) for a given length of time, and at least one main electric supply device (60, 61) for the disk drive, monitoring means (50) for at least the back-up electric power supply means (62) and the main supply devices (60, 61), **characterised in that** the monitoring means (50) are connected to the bus (2) and can be interrogated by interrogation means (31) of the host system (3) the latter validating or not validating the write disk cache function in the write commands sent to the disk drive(s) (1a, 1b, 1c), depending on the information collected by the monitoring means (50).

2. Disk cache device secured in write mode according to Claim 1 **characterised in that** the information collected by the monitoring means (50) represents the operating state of each main supply (60, 61) and of the back-up power supply means (62).

3. Disk cache device secured in write mode according to Claim 1 or 2 **characterised in that** the write cache function is validated by the host system (3) in the write commands for as long as the main supplies (60, 61) and the back-up power supply means (62) are operational.

4. Disk cache device secured in write mode according to one of Claims 1 to 3 **characterised in that** the host system (3) causes the data contained in all the disk caches (13a, 13b, 13c) of the disk drives (1a, 1b, 1c) to be written to the respective magnetic medium (10a, 10b, 10c) as soon as the information collected by the monitoring means (50) indicates that the main supplies (60, 61) and the back-up power supply means (62) are failing.

5. Disk cache device secured in write mode according to one of Claims 1 to 4 **characterised in that** the interrogation means (31) comprise an agent (31) installed at a higher level than that of the connection manager (30) of the host system (3), which carries out an examination of the monitoring means (50) according to a given period and positions a flag indicating whether or not the write cache function is authorised, this flag being consulted by the connection manager (30) of the host system (3) before each write command is sent to at least one disk (1a, 1b, 1c).

6. Disk cache device secured in write mode according to one of Claims 1 to 5 **characterised in that** the period during which the power supply means (62) have to allow correct operation of the information processing system, corresponds to at least the length of time necessary for the data contained in each disk cache (13a, 13b, 13c) of a disk drive (1a, 1b, 1c) to be written to the magnetic medium (10a, 10b, 10c), increased by the necessary time lag between two interrogations of the monitoring means (50).

7. Disk cache device secured in write mode according to one of Claims 1 to 6 **characterised in that** it comprises an integrated circuit monitoring the back-up electric power supply means (62) and each main power supply device (60, 61) and sending over the bus (2) an interface signal to prevent the bus from accessing the host system (3) for a given length of time so that no further command is transmitted to the disk drives (1a, 1b, 1c).

8. Disk cache method secured in write mode of an information-processing system comprising at least one hard disk drive (1a, 1b, 1c) supplied by at least one main power supply device (60, 61) and back-up power supply means (62) for a given length of time, a host system (3) connected by an adaptor (30) of the system and a bus (2) to at least the disk drive and monitoring means (50) for at least the means (62) providing the back-up electric power and the main supplies (60, 61), **characterised in that** the method comprises;
- a step of monitoring the back-up power supply means (62) and each electric supply device (60, 61),
- a step of indicating the state of the back-up power supply means (62) and each electric supply device (60, 61),
- if the back-up power supply means (62) and the two electric supply devices (60, 61) are all in a functional state the method comprises a step of validating the write disk cache function; if not, the method comprises a backup step comprising a step of invalidating the disk cache function in write mode and a step of writing the data contained in the disk cache (13a, 13b, 13c) of the disk drives (1a, 1b, 1c) to the magnetic medium (10a, 10b, 10c) of the disk drives (1a, 1b, 1c).

## Patentansprüche

1. Schreibgesicherte Platten-Cache-Vorrichtung, mit einem Host-System (3), das über einen Adapter (30) des Host-Systems mit einem Bus (2), einer Schnittstelle (12) und wenigstens einer Festplatteneinheit (1) verbunden ist, Mitteln (62) zum Liefern von Hilfsenergie während einer vorgegebenen Dauer und wenigstens einer Haupt-Stromversorgungsvorrichtung (60, 61) für die Platteneinheit und Mitteln (50) zum Überwachen wenigstens der Mittel (62) zum Liefern von elektrischer Hilfsenergie und der Hauptversorgungsvorrichtungen (60, 61), **dadurch gekennzeichnet, dass** die Überwachungsmittel (50) an den Bus (2) angeschlossen sind und durch Abfragemittel (31) des Host-Systems (3) abgefragt werden können, wobei dieses die Platten-Cache-Schreibfunktion in den Schreibbefehlen, die zu der einen oder den mehreren Platteneinheiten (1a, 1b, 1c) gerichtet sind, in Abhängigkeit von von den Überwachungsmitteln (50) empfangenen Informationen validiert oder nicht.

2. Schreibgesicherte Platten-Cache-Vorrichtung nach Anspruch 1, **dadurch gekennzeichnet, dass** die von den Überwachungsmitteln (50) empfangenen Informationen den Betriebszustand jeder Hauptversorgung (60, 61) und der Mittel (62) zum Liefern von Hilfsenergie repräsentieren.

3. Schreibgesicherte Platten-Cache-Vorrichtung nach Anspruch 1 oder 2, **dadurch gekennzeichnet, dass** die Cache-Schreibfunktion durch das Host-System (3) in den Schreibbefehlen validiert wird, solange die Hauptversorgungen (60, 61) und die Mittel (62) zum Liefern von Hilfsenergie in Betrieb sind.

4. Schreibgesicherte Platten-Cache-Vorrichtung nach einem der Ansprüche 1 bis 3, **dadurch gekennzeichnet, dass** das Host-System (3) das Schreiben von Daten, die in allen Platten-Cache-Speichern (13a, 13b, 13c) der Platteneinheiten (1a, 1b, 1c) enthalten sind, auf den entsprechenden magnetischen Träger (10a, 10b, 10c) hervorruft, sobald die von den Überwachungsmitteln (50) empfangenen Informationen angeben, dass die Hauptversorgungen (60, 61) und die Mittel (62) zum Liefern von Hilfsenergie ausgefallen sind.

5. Schreibgesicherte Platten-Cache-Vorrichtung nach einem der Ansprüche 1 bis 4, **dadurch gekennzeichnet, dass** die Abfragemittel (31) einen Agenten (31) umfassen, der auf einer Ebene implantiert ist, die höher als jene der Steuerung des Anschlusses (30) des Host-Systems (3) ist, und der mit einer vorgegebenen Periode eine Abfrage der Überwachungsmittel (50) ausführt und einen Merker (Flag) setzt, der angibt, ob die Cache-Schreibfunktion erlaubt ist oder nicht, wobei dieser Merker von der Steuerung (30) des Anschlusses des Host-Systems (3) abgefragt wird, bevor jeder Schreibbefehl zu wenigstens einer Platte (1a, 1b, 1c) geschickt wird.

6. Schreibgesicherte Platten-Cache-Vorrichtung nach einem der Ansprüche 1 bis 5, **dadurch gekennzeichnet, dass** die Dauer, während der die Mittel (62) zum Liefern von Energie den richtigen Betrieb des Datenverarbeitungssystems ermöglichen, wenigstens der Dauer entspricht, die notwendig ist, damit die Daten, die in jedem Platten-Cache-Speicher (13a, 13b, 13c) einer Platteneinheit (1a, 1b, 1c) enthalten sind, auf den magnetischen Träger (10a, 10b, 10c) geschrieben werden können, erhöht um die Zeit, die zwischen zwei Abfragen der Überwachungsmittel (50) notwendig ist.

7. Schreibgesicherte Platten-Cache-Vorrichtung nach einem der Ansprüche 1 bis 6, **dadurch gekennzeichnet, dass** sie eine integrierte Schaltung umfasst, die die Mittel (62) zum Liefern der elektrischen Hilfsenergie und jede Hauptstromversorgungsvorrichtung (60, 61) überwacht und zu dem Bus (2) ein Schnittstellensignal schickt, um den Zugriff des Busses auf das Host-System (3) während einer bestimmten Dauer zu verbieten, derart, dass dann an die Platteneinheiten (1a, 1b, 1c) kein Befehl übertragen wird.

8. Schreibgesichertes Platten-Cache-Verfahren für ein Datenverarbeitungssystem, das wenigstens eine Festplatteneinheit (1a, 1b, 1c), das von wenigstens einer Hauptstromversorgungsvorrichtung (60, 61) und von Mitteln (62) zum Liefern von Hilfsenergie während einer bestimmten Dauer versorgt wird, ein Host-System (3), das über einen Adapter (30) des Systems und einen Bus (2) wenigstens mit der Platteneinheit verbunden ist, und Mittel (50) zum Überwachen wenigstens der Mittel (62) zum Liefern von elektrischer Hilfsenergie und der Hauptversorgung (60, 61) umfasst, **dadurch gekennzeichnet, dass** das System umfasst:
- einen Schritt des Überwachens der Mittel (62) zum Liefern von Hilfsenergie und jeder Stromversorgungsvorrichtung (60, 61),
- einen Schritt des Meldens des Zustandes der Mittel (62) zum Liefern von Hilfsenergie und jeder Stromversorgungsvorrichtung (60, 61),
- wobei das Verfahren dann, wenn die Mittel (62) zum Liefern von Hilfsenergie und die zwei Stromversorgungsvorrichtungen (60, 61) alle in einem Betriebszustand sind, einen Schritt des Validierens der Platten-Cache-Schreibfunktion umfasst und im entgegengesetzten Fall einen Sicherungsschritt umfasst, der seinerseits einen Schritt des Nichtvalidierens der Platten-Cache-Schreibfunktion und einen Schritt des Schreibens der in dem Platten-Cache (13a, 13b, 13c) der Platteneinheiten (1a, 1b, 1c) enthaltenen Daten auf den magnetischen Träger (10a, 10b, 10c) der Platteneinheiten (1a, 1b, 1c) umfasst.
